# EUROPEAN PATENT APPLICATION

(11) **EP 2 381 090 A2**
(43) Date of publication of application: **26.10.2011**
(21) Application number: 10165597.5
(22) Date of filing: 10.06.2010
(51) Int. Cl.: F03B 17/06

(54) **Leverage-maximizing vertical axis waterwheel rotor**

(30) Priority: 25.04.2010 US 327701 P
(71) Applicant: Iiapia, 2585 JH Den Haag (NL); Fransen, Paul, 2585 JH Den Haag (NL)
(72) Inventor: Fransen, Paul, 2585 JH, Den Haag (NL)

(57) **Abstract**

The present invention relates in general to the field of rotor designs using blades with a specific freedom to rotate in order to produce maximum resistance when encountering water flow in one direction, and either minimum resistance, when encountering water flow in the opposite direction. It aims at utilizing the currents of oceans and seas and rivers to generate electricity. Its design makes it possible to realize a rotor diameter much larger than existing devices for vertical axis rotors, and by this it will introduce leverage as a main characteristic for harnessing the power of relatively slow river and ocean currents by vertical axis rotors.

## Description

The present invention relates in general to the field of rotor designs using blades with a specific freedom to rotate in order to produce maximum resistance when encountering water flow in one direction, and either minimum resistance, when encountering water flow in the opposite direction.

Present state-of-the art water powered electrical power generating systems are still based on the paradigm of relatively small water volume passage with relatively high speed. Most of these systems have the character of (adapted) turbines. The diameter of these devices is usually expressed in terms of less than 30 yards. The use of leverage power is not a dominant quality. Therefore these designs are not able to make sufficient use of the extensive power of the vast volumes of slow sea or river currents.

Also in the field of vertical axed rotor designs, using blades that when rotating produce maximum drag when encountering water flow in one direction, and either minimum drag, when encountering water flow in the opposite direction, the diameter always stayed limited, due to the fact that the paradigm of (relatively small) water volume passage with (relatively) high speed was never left. These designs could never compete with the turbines, and were never successful.

The present invention utilizes a design which makes very large diameters possible (60 yards or more), catching the pressure of vast volumes of slow streaming currents, deliberately using leverage to deliver tremendous power to a central rotating hub, being the starting gear wheel to transfer this power to one ore more electric generators. This design is a new direction in the design of water powered electrical power generating systems.

By positioning the central rotation axis vertically, using vertically flexible spokes connected to blades rotating around a planetary axis parallel to the central axis and using blades, deliberately constructed to have adjustable buoyancy to support the construction, it is made possible to extend the diameter of the rotor to such a scale that the use of leverage power becomes a dominant factor. The design thereby operates with water flow from any direction, eliminating the need to rotate the entire structure to face the water flow. As a one-line description the design can be called a "leverage maximizing balanced floating-blade supported vertical axis planetary rotor device", but in the following the term "planetary rotor device" is used.

The adjustment of the buoyancy of rotor blades to obtain a "balanced floating-blade" takes place when the planetary rotor device is assembled or when maintenance is needed. In the field of rotors and turbines utilized for harnessing currents to generate electricity this is a new application. Adjustable buoyancy itself is well known technology. Letting water in or blowing it out to achieve a desired buoyancy is used in all kinds marine applications. Therefore it is not described in detail, but only pointed out to be an essential component of this invention.

The planetary rotor device is rotating around a fixed pipe or pillar. This pillar can be driven into the bottom of a river, lake or ocean/sea, it can be mounted on a foundation on the bottom of a river, lake or ocean/sea; and it can be mounted on a floating body anchored to the bottom of an ocean or river.

While the blades are always in the water, the rotor spokes can be positioned above or below the water level. Positioned below the water level the design of the spoke is adapted to supply additional driving power by its special shape. This special shape also provides a certain vertical flexibility to the spokes, comparable to the wings of large airplanes. Positioned above water level, the spokes are constructed to be strong enough to cope with the forces of the waves in extreme circumstances. The strength of this construction is dependent of the geographic situation. It must be evident that there is a difference between ocean/sea applications and applications in rivers.

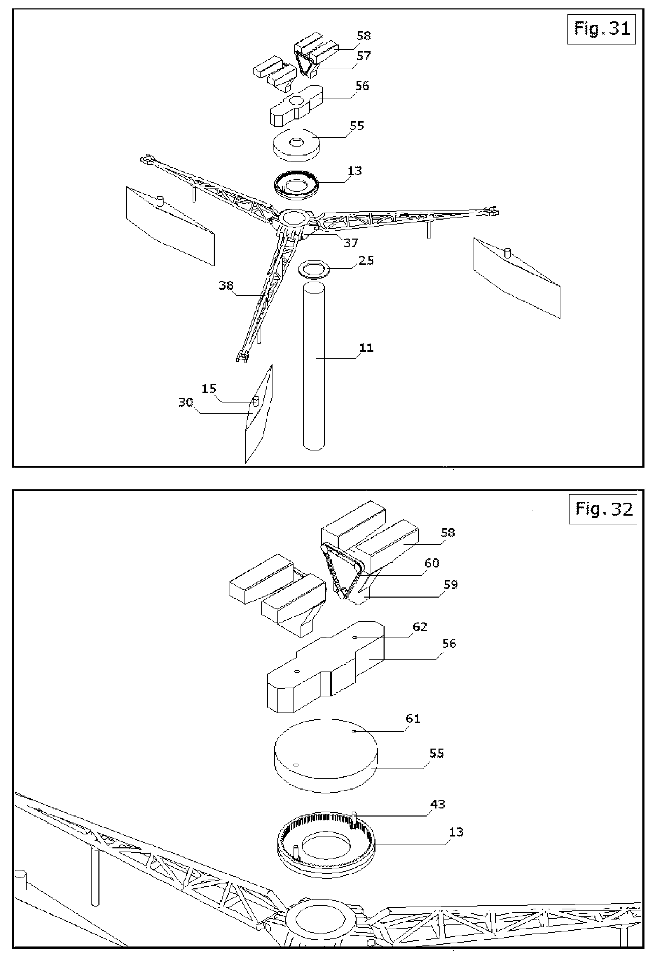

For further transmission of the rotating power from the starting gear wheel to the electricity generators a transmission system in a housing constructed on the fixed central axis is needed. As such transmission systems and generators are well known technology they are not described in detail, but only pointed out to be natural components to make use of this invention. Examples of the build up of a complete power station using standard components applied in the windmill industry can be found in Fig. 31, 32 and 33.

### BRIEF DESCRIPTION OF THE DRAWINGS:

The present invention will be described by way of exemplary embodiments, but not limitations, illustrated in the accompanying drawings in which like references denote similar elements, and in which:
FIG. 1 illustrates a drawing of a an axonometric view of a planetary rotor device with 3 spokes below water level and with blade cutout, in accordance with one embodiment of the present invention.
FIG. 2 illustrates a drawing of a top view of a planetary rotor device with 3 spokes below water level and with blade cutout, in accordance with one embodiment of the present invention.
FIG. 3 illustrates a drawing of a second top view of a planetary rotor device with 3 spokes below water level and with blade cutout, in accordance with one embodiment of the present invention.
FIG. 4 illustrates a drawing of a third top view of a planetary rotor device with 3 spokes below water level and with blade cutout, in accordance with one embodiment of the present invention.
FIG. 5 illustrates a drawing of a fourth top view of a planetary rotor device with 3 spokes below water level and with blade cutout, in accordance with one embodiment of the present invention.
FIG. 6 illustrates a drawing of a front view (looking downstream) of a planetary rotor device with 3 spokes below water level and with blade cutout, in accordance with one embodiment of the present invention.
FIG. 7 illustrates a drawing of an axonometric view of a planetary rotor device with 3 spokes below water level, having the connection between spoke and parallel axle at the lower extremity of the parallel axle, in accordance with one embodiment of the present invention.
FIG. 8 illustrates a drawing of a top view of a planetary rotor device with 3 spokes below water level, having the connection between spoke and parallel axle at the lower extremity of the parallel axle, in accordance with one embodiment of the present invention.
FIG. 9 illustrates a drawing of a front view (looking downstream) of a planetary rotor device with 3 spokes below water level, having the connection between spoke and parallel axle at the lower extremity of the parallel axle, in accordance with one embodiment of the present invention.
FIG. 10 illustrates a drawing of an axonometric view of a planetary rotor device with 3 spokes below water level, having the connection between spoke and parallel axle at the upper extremity of the parallel axle, in accordance with one embodiment of the present invention.
FIG. 11 illustrates a drawing of a front view (looking downstream) of a planetary rotor device with 3 spokes below water level, having the connection between spoke and parallel axle at the upper extremity of the parallel axle, in accordance with one embodiment of the present invention.
FIG. 12 illustrates a drawing of an axonometric view of a planetary rotor device with 3 spokes below water level, each spoke having a pair of rotating blades, in accordance with one embodiment of the present invention.
FIG. 13 illustrates a drawing of a front view (looking downstream) of a planetary rotor device with 3 spokes below water level, each spoke having a pair of rotating blades, in accordance with one embodiment of the present invention.
FIG. 14 illustrates a drawing of an axonometric view of a planetary rotor device with 3 pairs of spokes below water level, in accordance with one embodiment of the present invention.
FIG. 15 illustrates a drawing of a front view (looking downstream) of a planetary rotor device with 3 pairs of spokes below water level, in accordance with one embodiment of the present invention.
FIG. 16 illustrates a drawing of an axonometric view of a planetary rotor device with 3 spokes above water level, in accordance with one embodiment of the present invention.
FIG. 17 illustrates a drawing of a top view of a planetary rotor device with 3 spokes above water level, in accordance with one embodiment of the present invention.
FIG. 18 illustrates a drawing of a front view (looking downstream) of a planetary rotor device with 3 spokes above water level, in accordance with one embodiment of the present invention.
FIG. 19 illustrates a drawing of an axonometric view of a planetary rotor device with 3 pairs of spokes where of each pair of spokes one spoke is above water level and one spoke is below water level, in accordance with one embodiment of the present invention.
FIG. 20 illustrates a drawing of a front view (looking downstream) of a planetary rotor device with 3 pairs of spokes where of each pair of spokes one spoke is above water level and one spoke is below water level, in accordance with one embodiment of the present invention.
FIG. 21 illustrates a drawing of an axonometric view of the starting gear wheel and hinge construction as a part of the central hub of a planetary rotor device with spokes above water level, in accordance with one embodiment of the present invention.
FIG. 22 illustrates a drawing of an axonometric view of the starting gear wheel being the upper part of the central hub of a planetary rotor device with spokes below water level, in accordance with one embodiment of the present invention.
FIG. 23 illustrates a drawing of an axonometric view of an external gear type starting gear wheel being the upper part of the central hub of a planetary rotor device, in accordance with one embodiment of the present invention.
FIG. 24 illustrates a drawing of an axonometric view of a bevel gear type starting gear wheel being the upper part of the central hub of a planetary rotor device in accordance with one embodiment of the present invention.
FIG. 25 illustrates a drawing of an axonometric view of the hinge-2 joint between an above water level spoke and a parallel axle with blade, in accordance with one embodiment of the present invention
FIG. 26 illustrates a drawing of an axonometric view of the hinge joint between an below water level spoke and a parallel axle with blade having a cutout, in accordance with one embodiment of the present invention
FIG. 27 illustrates a drawing of an axonometric view of the hinge joint between an below water level spoke and a parallel axle with blade not having a cutout, in accordance with one embodiment of the present invention
FIG. 28 illustrates a drawing of an an axonometric view of the sliding joint between a below water level spoke and a parallel axle of a rotor with 3 pairs of spokes where of each pair of spokes one spoke is above water level and one spoke is below water level
FIG. 29 illustrates a drawing of a sectional plane view of a below water level spoke, in accordance with one embodiment of the present invention
FIG. 30 illustrates a drawing of a collection of sectional plane views of balanced floating blades, in accordance with one embodiment of the present invention
FIG. 31 illustrates a drawing of an application of this invention with main elements separated, showing one of the possibilities to utilize it to drive a multiple set of standard windmill generators.
FIG. 32 illustrates a more detailed drawing of an application of this invention, with main elements separated,, showing in detail one of the possibilities to utilize it to drive a multiple set of generators, commonly used in the wind turbine field.
FIG. 33 illustrates an integrated drawing of an application of this invention, showing one of the possibilities to combine it with existing wind turbine technology.

### DETAILED DESCRIPTION OF ILLUSTRATIVE EMBODIMENTS:

Various aspects of the illustrative embodiments will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative embodiments. However, it will be apparent to one skilled in the art that the present invention may be practiced without the specific details. In other instances, well-known features are omitted or simplified in order not to obscure the illustrative embodiments.

Various operations will be described as multiple discrete operations, in turn, in a manner that is most helpful in understanding the present invention; however, the order of description should not be construed as to imply that these operations are necessarily order dependent. In particular, these operations need not be performed in the order of presentation.

The phrase "in one embodiment" is used repeatedly. The phrase generally does not refer to the same embodiment, however, it may. The terms "comprising", "having" and "including" are synonymous, unless the context dictates otherwise.

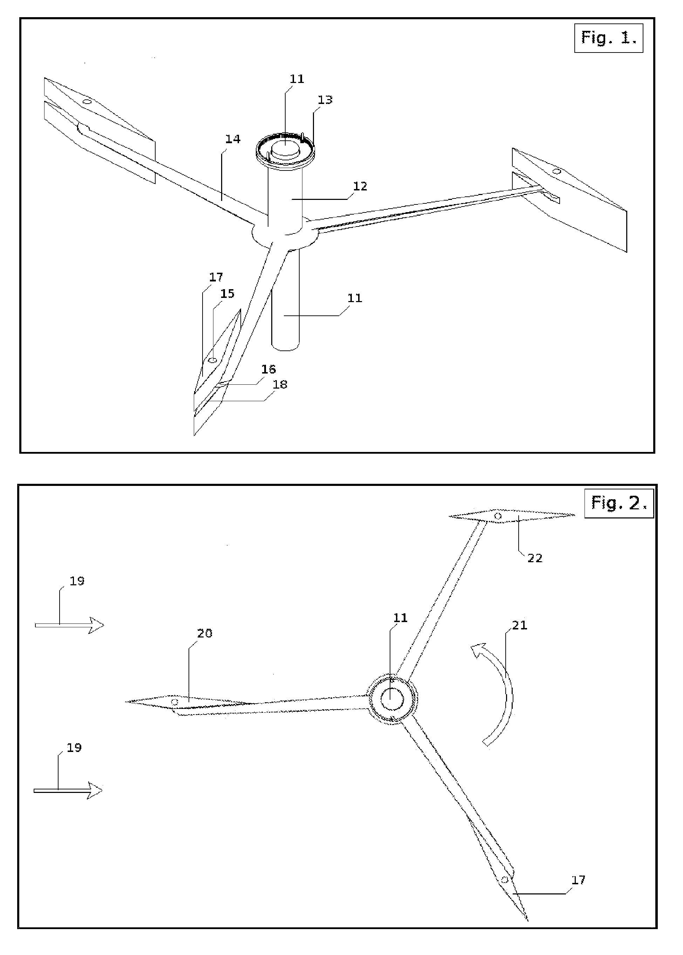

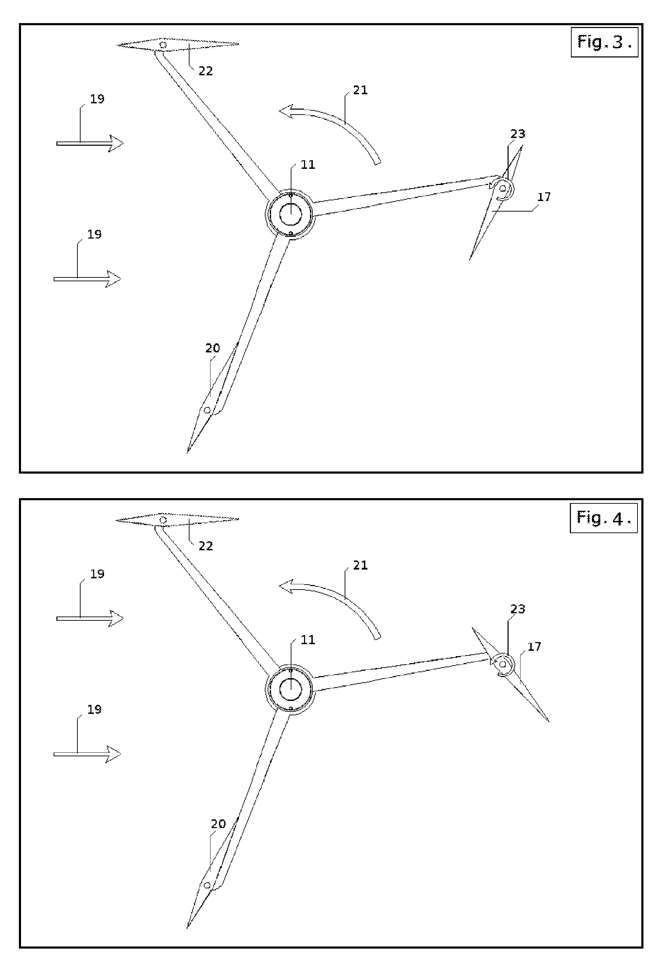

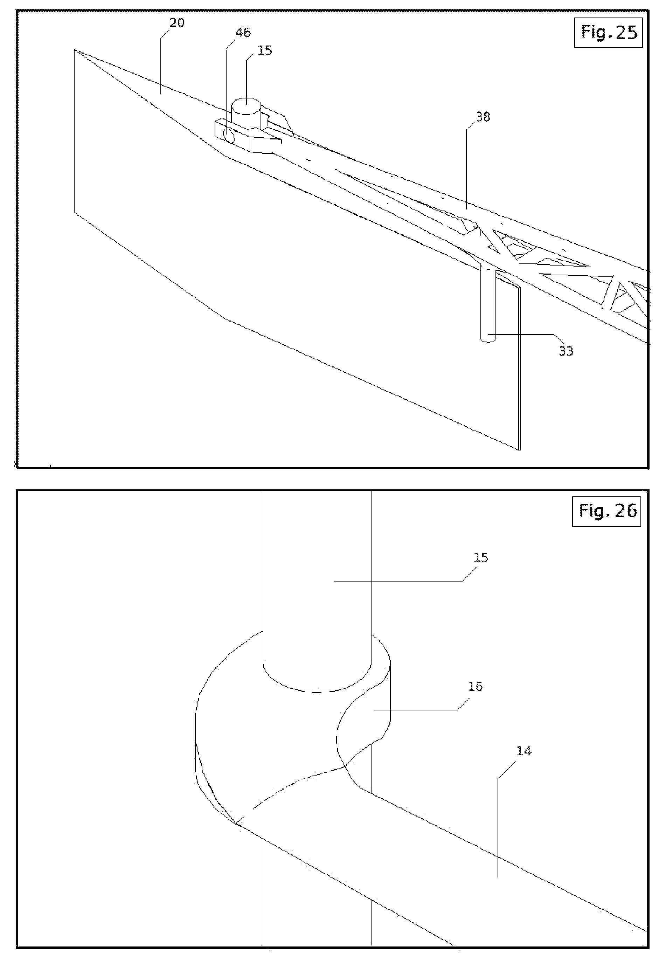

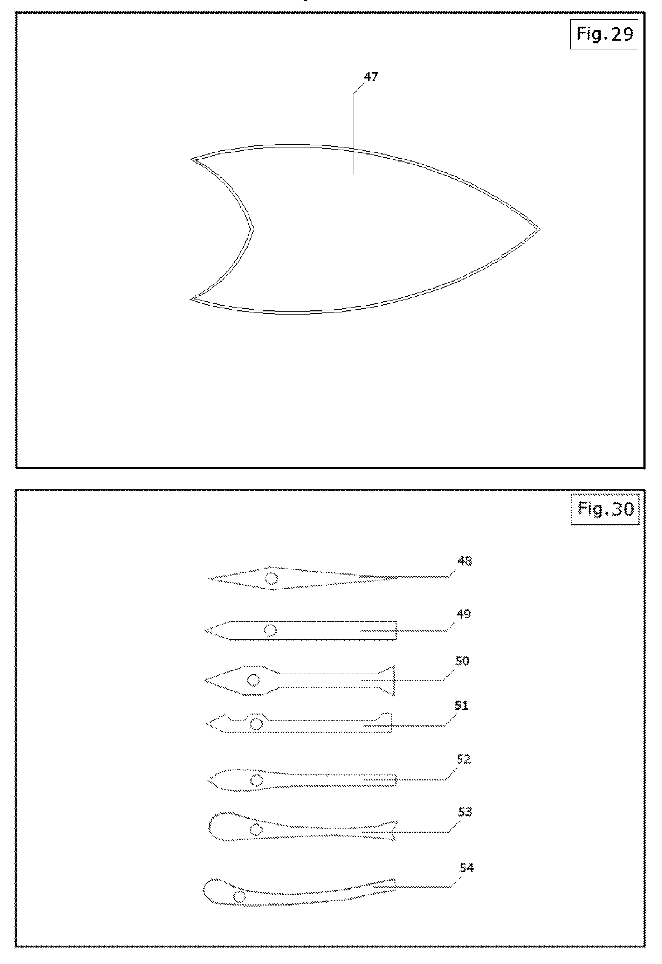

Now referring to FIG. 1, as in one embodiment of the present invention, shown is an axonometric view of a planetary rotor device with 3 spokes below water level and with blade cutout. Shown is a fixed central axle **11** with rotating hub **12,** the upper ring **13** of the hub being the starting gear wheel to transmit power. Shown are the spokes **14,** being fixed connected to the hub, but by their design and construction relatively flexible in upwards and downwards movement, like the wings of a large airplane. This flexibility is needed to cope with the underwater movement caused by waves at the surface. These spokes are shaped with a sharp edge at one side and a hollow shape at the other side (see Fig. 29) to derive additional power from the current. In this situation the connection between spoke and parallel axle **15** is at the middle of the parallel axle. At the end of the spoke the hinge lug **16** (see also Fig. 26) is specially shaped to hold the planetary axle **15** in such a position to the spoke, that the balanced floating blade **17** can position itself in full length parallel resting against the spoke, when forced so by the stream (see Fig 2, 3, 4). This means that the turning point of the blade around the planetary axle is not positioned on a straight line with the longitudinal axis of the spoke, but aside of it. In this rotor-design the balanced floating blade is shaped with a cutout **18** to facilitate the free positioning of the blade, when as a consequence of the circular movement of the rotor the planetary axle is passing the point where the pressure of the stream will rotate the blade away from its position parallel against the spoke to a new position with minimal resistance to the current. (see Fig 3, 4)

Referring to FIG. 2 as in one embodiment of the present invention, shown is a top view of a planetary rotor device with 3 spokes below water level and with blade cutout. The position of the balanced floating blades referring to the direction of the current **19** is as follows: The blade **20** most stream upwards is just in a position parallel to the spoke and by this has lost its freedom to adapt its position freely to minimize its resistance to the stream. The blade **17** already parallel positioned to and being pushed against the spoke by the stream receives most of the power from the current and causes the rotor to rotate counterclockwise **21** around the central axle **11 .** The blade **22** by its freedom to adapt its position freely delivers minimal resistance to the current and is moving upwards the stream.

Referring to FIG. 3 as in one embodiment of the present invention, shown is a top view of a planetary rotor device with 3 spokes below water level and with blade cutout. The position of the balanced floating blades referring to the direction of the current **19** is as follows: The blade **20** already parallel positioned against the spoke receives most of the power from the current and causes the rotor to rotate counterclockwise **21** around the central axle **11.** The blade 17 most stream downwards is rotating also counterclockwise **23** around the parallel axle away form its position parallel to the spoke and is turning to find a position with the least resistance to the current. The blade **22** delivers minimal resistance to the current and is moving upwards the stream.

Referring to FIG. 4 as in one embodiment of the present invention, shown is a top view of a planetary rotor device with 3 spokes below water level and with blade cutout. This drawing is almost identical to fig. 3 , illustrating the further rotating of the blade 17 most stream downwards counterclockwise **23** around the parallel axle, turning to find a position with the least resistance to the current.

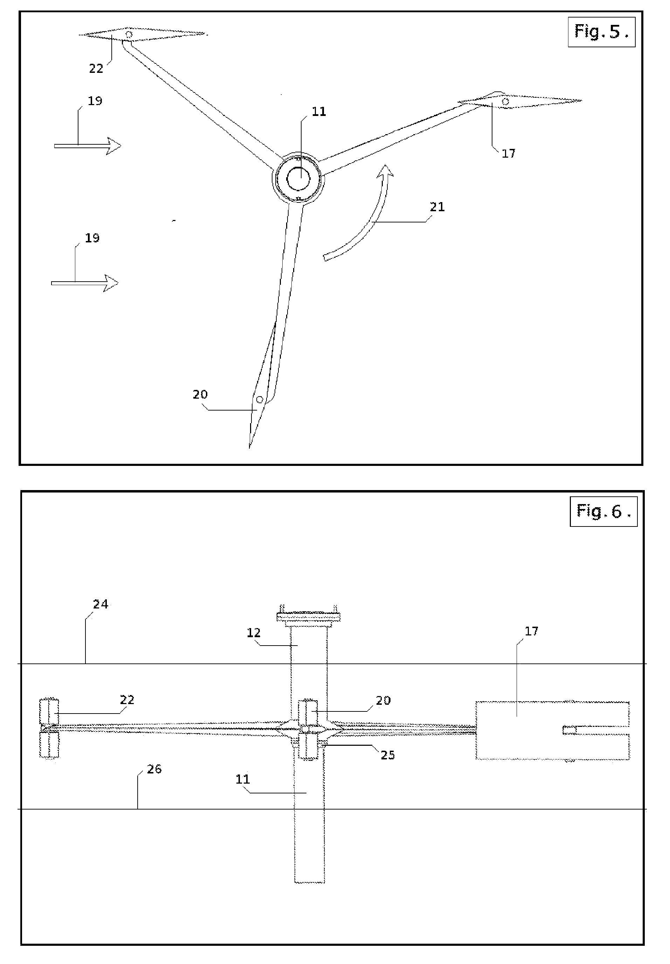

Referring to FIG. 5 as in one embodiment of the present invention, shown is a top view of a planetary rotor device with 3 spokes below water level and with blade cutout. The position of the balanced floating blades referring to the direction of the current **19** is as follows: The blade **20** already parallel positioned against the spoke receives most of the power from the current and causes the rotor to rotate counterclockwise **21** around the central axle **11.** The blade **22** delivers minimal resistance to the current and is moving upwards the stream. The blade **17** most stream downwards has rotated to its position to deliver minimal resistance to the current and is also moving upwards the stream. The purpose of the blade cutout (see Fig 1) is shown as the far end of the spoke is transecting the blade **17.**

Referring to FIG. 6 as in one embodiment of the present invention, shown is a front view (looking downstream) of a planetary rotor device with 3 spokes below water level **24** and with blade cutout. As shown the central rotating hub **12** resting on a bearing ring device **25** attached to the fixed central axle **11** is partly above water level making it possible to construct the most vulnerable parts like the transmission system and the electric generators on a save distance from the water level. The fixed central axle **11** is driven into the bottom **26.** The balanced floating blades **(17, 20, 22)** are totally under water, making them less vulnerable to the forces of the waves on the surface. The buoyancy of the blades is adjusted in such a way that they compensate the sinking weight of the spokes and parallel axles, thus making the combination of spokes, parallel axles and blades in its totality almost weightless in their fluid surrounding. This adjustment also includes the right placement of ballast in the lower parts of the blades to stabilize their position as an upright stream catcher, and to avoid diagonal pressure on the parallel axles.

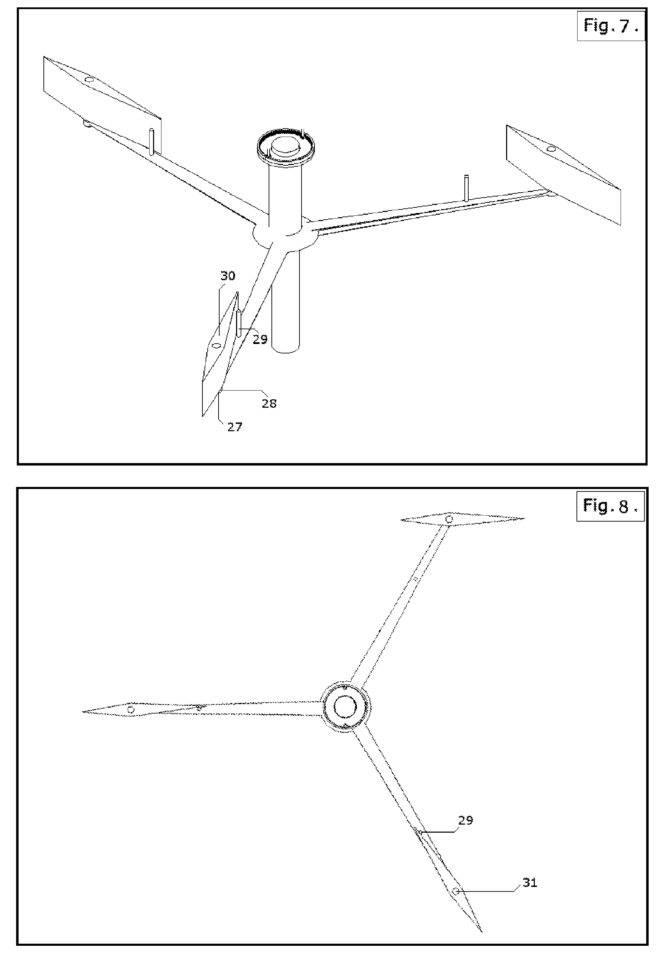

Referring to FIG. 7 as in one embodiment of the present invention, shown is an axonometric view of a planetary rotor device with 3 spokes below water level, having the connection between spoke and parallel axle not at the middle, but at the lower extremity **27** of the parallel axle. This construction gives the balanced floating blade full freedom to rotate without interference of the spoke. The hinge lug **28,** determining the turning point of the blade around the planetary axle does not need a special shape for positioning the blade parallel to the spoke. An upstanding rod on the spoke is functioning as a stop rod **29** against which the blade is to be pushed by the stream in a parallel position to the spoke in order to receive most power from the current. The blade **30** does not need a special cutout to facilitate the free positioning of the blade. By this construction the blade can easily be lifted upwards and taken from the parallel axle when maintenance is needed.

Referring to FIG. 8 as in one embodiment of the present invention, shown is a top view of a planetary rotor device with 3 spokes below water level, having the connection between spoke and parallel axle not at the middle, but at the lower extremity of the parallel axle. Contrary to the planetary rotor device with blade cutout (Fig. 2), the turning point **31** of the blade around the planetary axle is positioned on a straight line with the longitudinal axis of the spoke. Further the same explanations apply as used in reference to Fig. 2, with the exception that the positioning of the blade parallel to the spoke is not against the spoke itself, but against the stop rod **29** upstanding from the spoke. This top view drawing is exemplary for most of the top views concerning the planetary rotor device variations with spokes below water level described hereafter. Therefore most of these variations will be shown only as axonometric and front views.

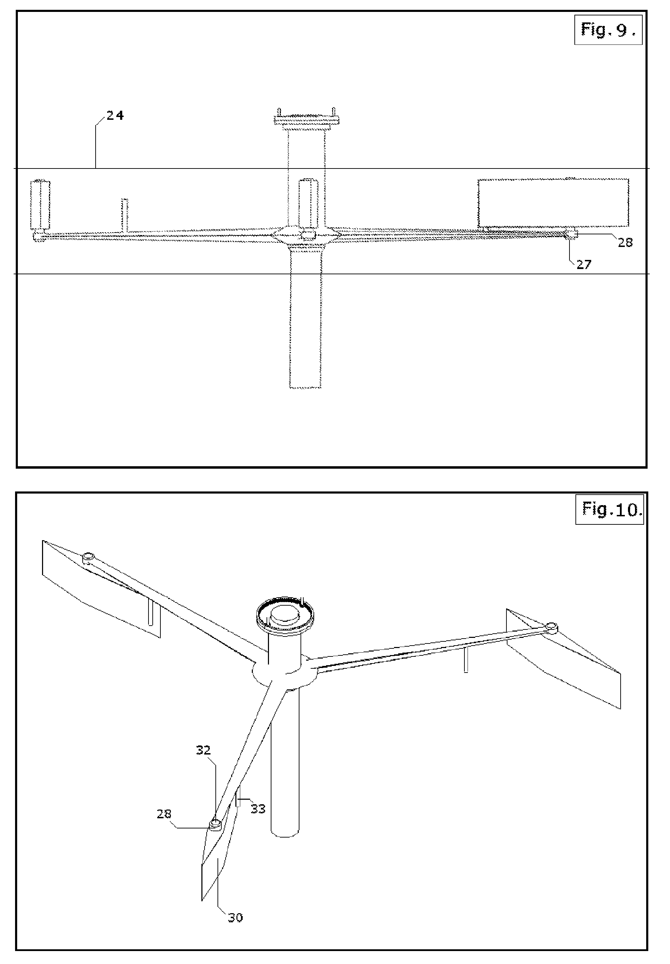

Referring to FIG. 9 as in one embodiment of the present invention, shown is a front view (looking downstream) of a planetary rotor device with 3 spokes below water level **24,** having the hinge lug **28** connection between spoke and parallel axle not at the middle, but at the lower extremity **27** of the parallel axle. Also is shown that the positioning of the blade parallel to the spoke is not against the spoke itself, but against the stop rod upstanding from the spoke. Further the same explanations apply as used in reference to Fig. 5.

Referring to FIG. 10 as in one embodiment of the present invention, shown is an axonometric view of a planetary rotor device with 3 spokes below water level, having the connection between spoke and parallel axle at the upper extremity **32** of the parallel axle. This construction gives the balanced floating blade full freedom to rotate without interference of the spoke. The hinge lugs **28** do not need a special shape for positioning the blade parallel to the spoke. A down pointing rod on the spoke is functioning as a stop rod **33** against which the blade is to be pushed by the stream in a parallel position to the spoke in order to receive most power from the current. The blade **30** does not need a special cutout to facilitate the free positioning of the blade. By this construction the blade can easily be sunken downwards and taken from the parallel axle when maintenance is needed.

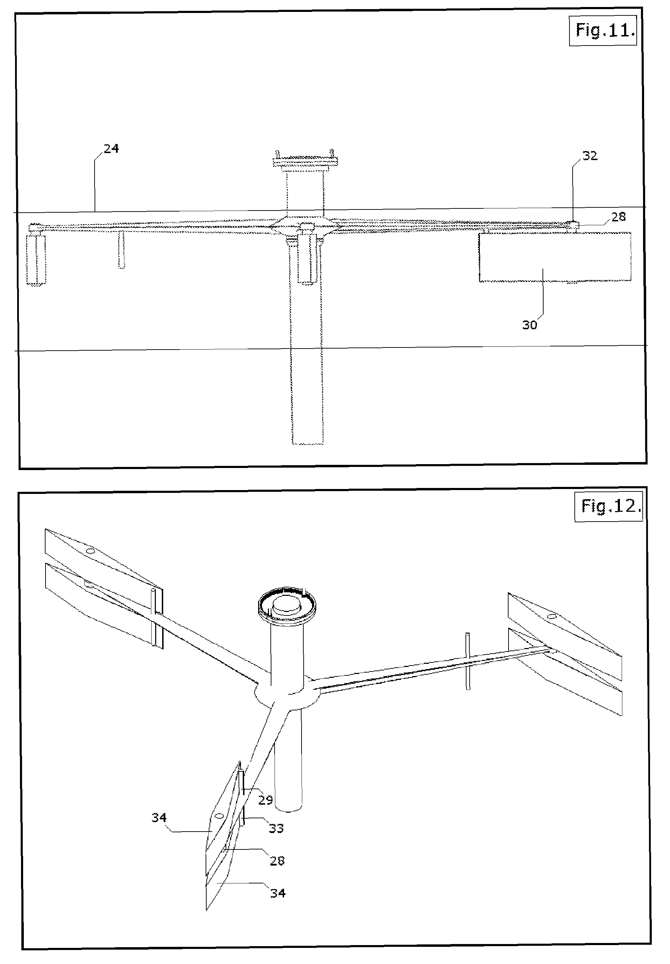

Referring to FIG. 11 as in one embodiment of the present invention, shown is a front view (looking downstream) of a planetary rotor device with 3 spokes below water level **24,** having the hing lug **28** connection between spoke and parallel axle at the upper extremity **32** of the parallel axle. This illustrates that the positioning of the blade **30** parallel to the spoke is against the stop rod pointing downwards from the spoke. Further the same explanations apply as used in reference to Fig. 5.

Referring to FIG. 12 as in one embodiment of the present invention, shown is an axonometric view of a planetary rotor device with 3 spokes below water level, each spoke having a pair of rotating blades. This construction also gives the balanced floating blades full freedom to rotate without interference of the spoke. The hinge lugs **28** do not need a special shape for positioning the blade parallel to the spoke. An upstanding rod **29** and a down pointing rod **33** on the spoke are functioning as stop rods against which the blades are to be pushed by the stream in a parallel position to the spoke in order to receive most power from the current. The blades **34** do not need a special cutout to facilitate the free positioning of the blade. By this construction the blades can easily be lifted upwards and downwards to be taken from the parallel axle when maintenance is needed.

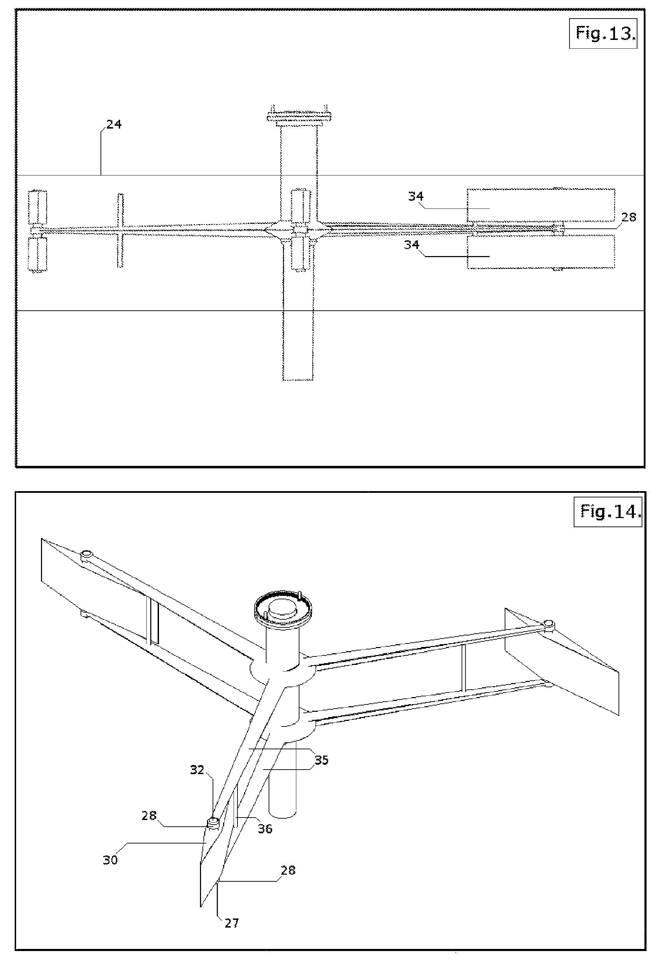

Referring to FIG. 13 as in one embodiment of the present invention, shown is a front view (looking downstream) of a planetary rotor device with 3 spokes below water level **24,** each spoke having a pair of rotating blades, The hinge lug **28** connection between spoke and parallel axle is at the middle of the parallel axle. This also illustrates that the positioning of the blades **34** parallel to the spoke is against the stop rods upstanding and downward pointing from the spoke. Further the same explanations apply as used in reference to Fig. 5.

Referring to FIG. 14 as in one embodiment of the present invention, shown is an axonometric view of a planetary rotor device with 3 pairs of spokes below water level. In this situation the connection between spoke and parallel axle is at both extremities **27, 32** of the parallel axle. By this way the parallel axis is held by a pair of spokes **35.** This gives the balanced floating blade full freedom to rotate without interference of the spokes. The hinge lugs **28** do not need a special shape for positioning the blade parallel to the spoke. A simple connecting rod **36** between the spokes, is functioning as a stop rod against which the blade is to be pushed by the stream in a parallel position to the spokes in order to receive most power from the current. The blade **30** does not need a special cutout to facilitate the free positioning of the blade. This construction (3 pairs of spokes) has the advantage of greater strength, but the disadvantage of more material used.

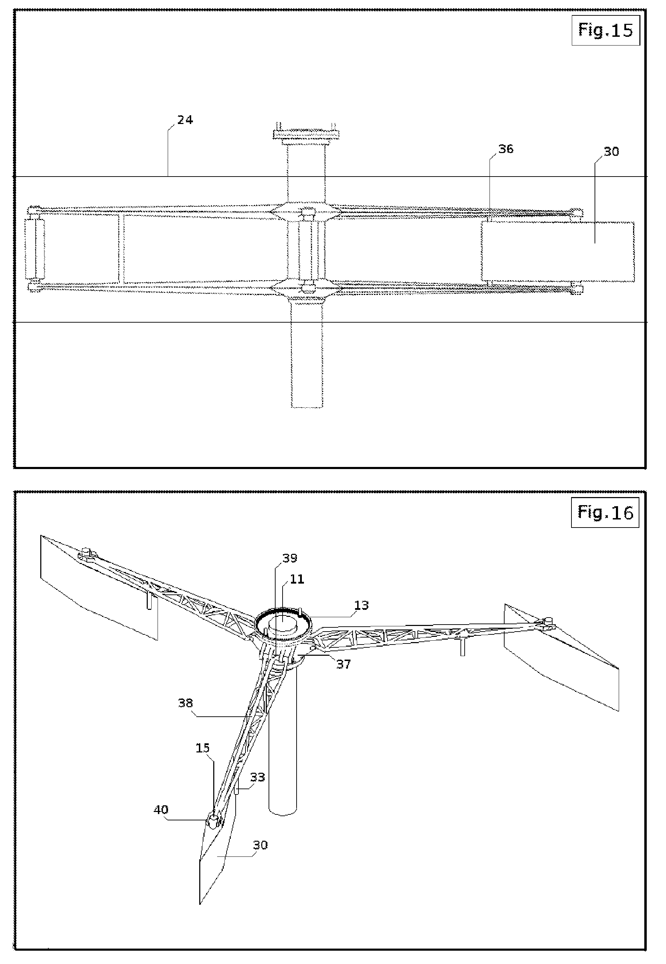

Referring to FIG. 15 as in one embodiment of the present invention, shown is a front view (looking downstream) of a planetary rotor device with 3 pairs of spokes below water level **24.** This illustrates that the positioning of the blade **30** parallel to the spoke is against the stop rod **36** between the upper spoke and lower spoke. Further the same explanations apply as used in reference to Fig. 5.

Referring to FIG. 16 as in one embodiment of the present invention, shown is an axonometric view of a planetary rotor device with 3 spokes above water level. Shown is a fixed central axle **11** with rotating hub **37,** the upper ring **13** of the hub being the starting gear wheel to transmit power. Shown are the spokes **38,** illustrated here as a strong but open construction to withstand the force of waves and wind, being connected to the hub by a robust hinge construction **39,** allowing vertical movement. This movement is needed to cope with different water levels (high tide, low tide) and with the influence of major waves at the surface. In this situation the connection **40** between spoke and parallel axle **15** is at the upper end of the parallel axle. This connection (see also Fig...) is a double hinge construction making it possible for the blade **30** to rotate around the planetary axis, but also to give it a certain degree of freedom to have its axle positioned in different vertical angles to the spoke, in order to keep the parallel position to the center axis when waves or change in water level cause the spokes to hinge vertically. Part of the spoke-construction is a stop rod **33** against which the blade is to be pushed by the stream in a parallel position to the spoke in order to receive most power from the current.

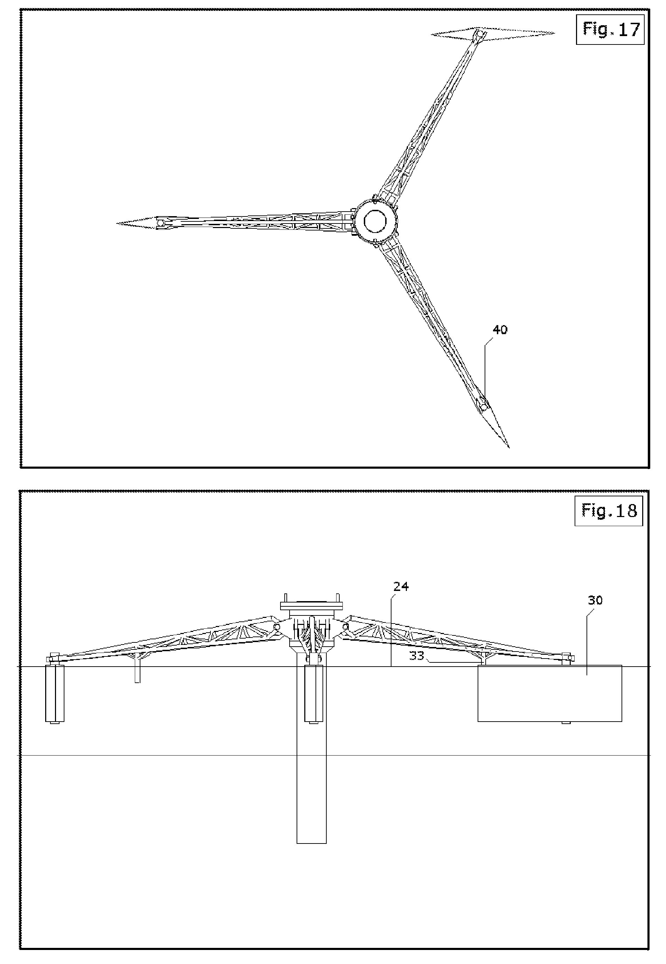

Referring to FIG.17 as in one embodiment of the present invention, shown is a top view of a planetary rotor device with 3 spokes above water level. The double hinge construction **40** holding the parallel axle is positioned in a straight line with the longitudinal axis of the spoke. Further the same explanations apply as used in reference to Fig. 2, with the exception that the positioning of the blade parallel to the spoke is not against the spoke itself, but against the (in this figure not visible) stop rod downward pointing from the spoke.

Referring to FIG. 18 as in one embodiment of the present invention, shown is a front view (looking downstream) of a planetary rotor device with 3 spokes above water level **24.** This illustrates that the positioning of the blade **30** parallel to the spoke is against the stop rod **33** downward pointing from the spoke. Further the same explanations apply as used in reference to Fig. 5.

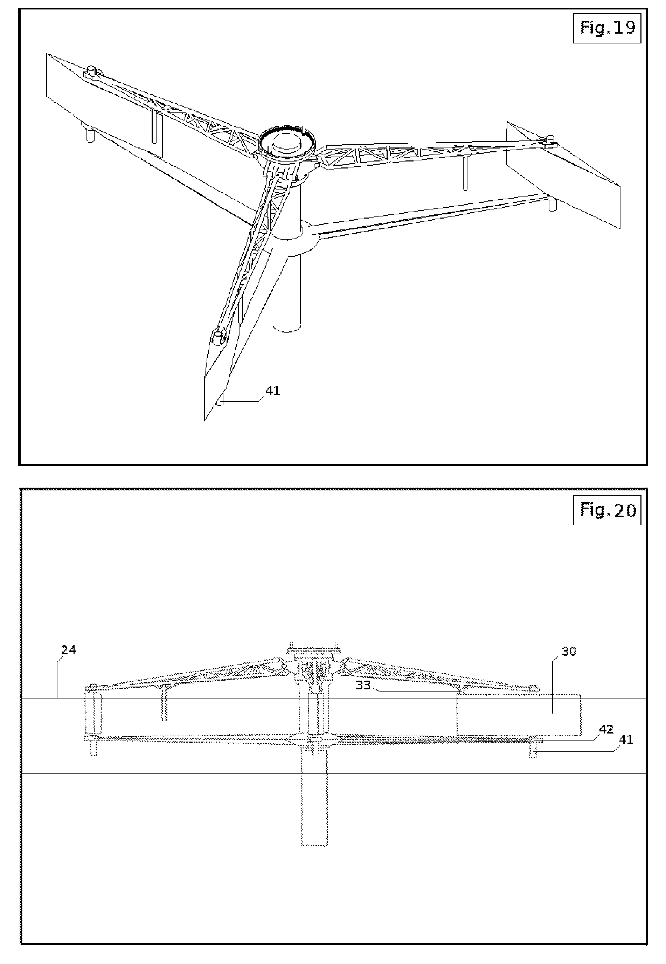

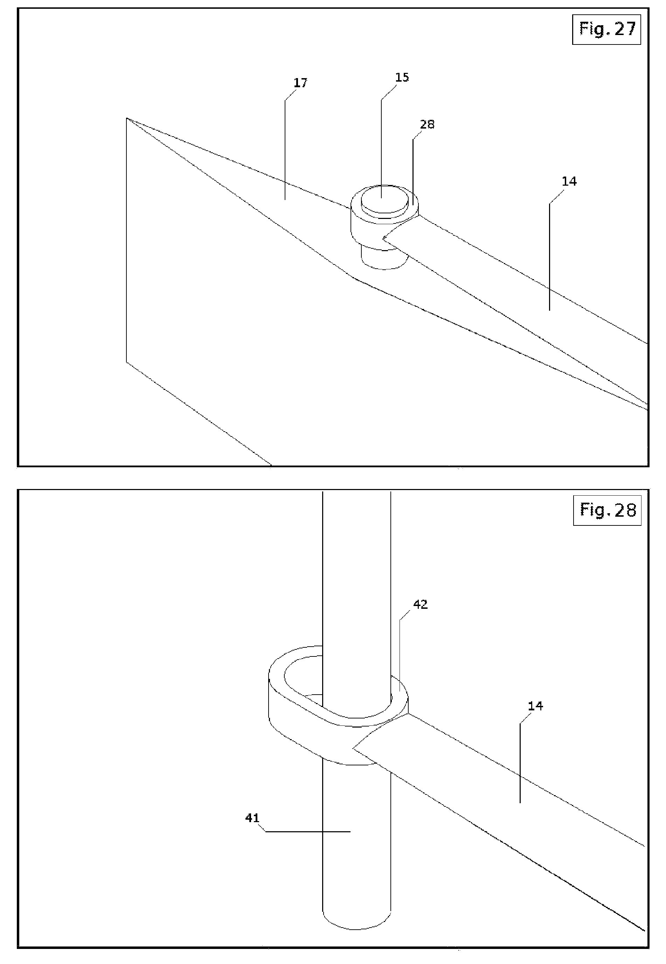

Referring to FIG. 19 as in one embodiment of the present invention, shown is an axonometric view of a planetary rotor device with 3 pairs of spokes where of each pair of spokes one spoke is above water level and one spoke is below water level. In this situation the connection between spoke and parallel axle is at both extremities of the parallel axle. Concerning the construction above water level the same explanations apply as used in reference to Fig. 15. The spokes below water level are equipped with a sliding connection (See Fig. 20 and Fig. 27) and the planetary axle has an extension **41,** all this in order to cope with the up-and-down movements of the blades and the spokes above water level due to waves or tidal effects. This construction (3 pairs of spokes) has the advantage of greater strength, but the disadvantage of more material used.

Referring to FIG. 20 as in one embodiment of the present invention, shown is a front view (looking downstream) of a planetary rotor device with 3 pairs of spokes where of each pair of spokes one spoke is above water level **24** and one spoke is below water level. This illustrates that the positioning of the blade **30** parallel to the spoke is not against the spoke itself, but against the stop rod **33** from the upper spoke. Also shown are the sliding connection **42** and the parallel axle extension **41** to cope with the up-and-down movements of the blades and the spokes above water level due to waves or tidal effects. Due to the sliding connection the sinking weight of the underwater spokes cannot be compensated by the buoyancy of the blades, so these spokes themselves (by their construction or the materials used) have to be "weightless" in their fluid surrounding. Further the same explanations apply as used in reference to Fig. 5.

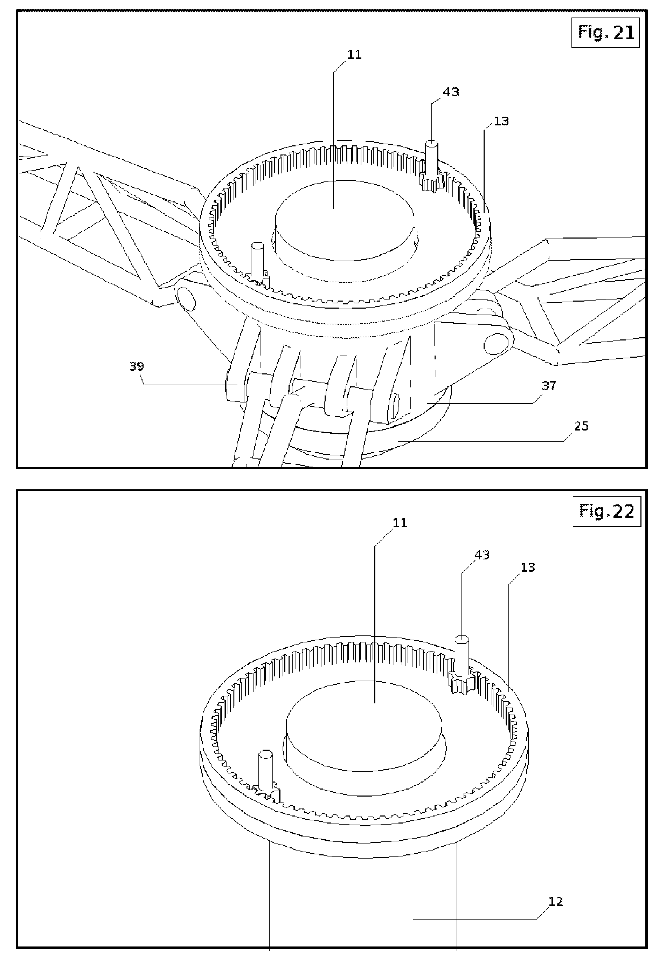

Referring to FIG. 21 as in one embodiment of the present invention, shown is an axonometric view of the starting gear wheel **13** and hinge construction **39** as a part of the central rotating hub **37** resting on a bearing ring device **25** of a planetary rotor device with spokes above water level. This illustrates the robustness of the hinge construction. Also shown are the small cogwheels and a part of their axles **43** that will transfer the rotation from the starting gear wheel to the gear unit housing (not shown here), which is mounted on the fixed central axis-pillar **11.**

Referring to FIG. 22 as in one embodiment of the present invention, shown is an axonometric view of the starting gear wheel **13** as a part of the central hub **12** of a planetary rotor device with spokes under water level. This illustrates the positioning of the gear construction safely above water level. Also shown are the small cogwheels and a part of their shafts **43** that will transfer the rotation from the starting gear wheel to the gear unit housing (not shown here), which is mounted on the fixed central axis-pillar.

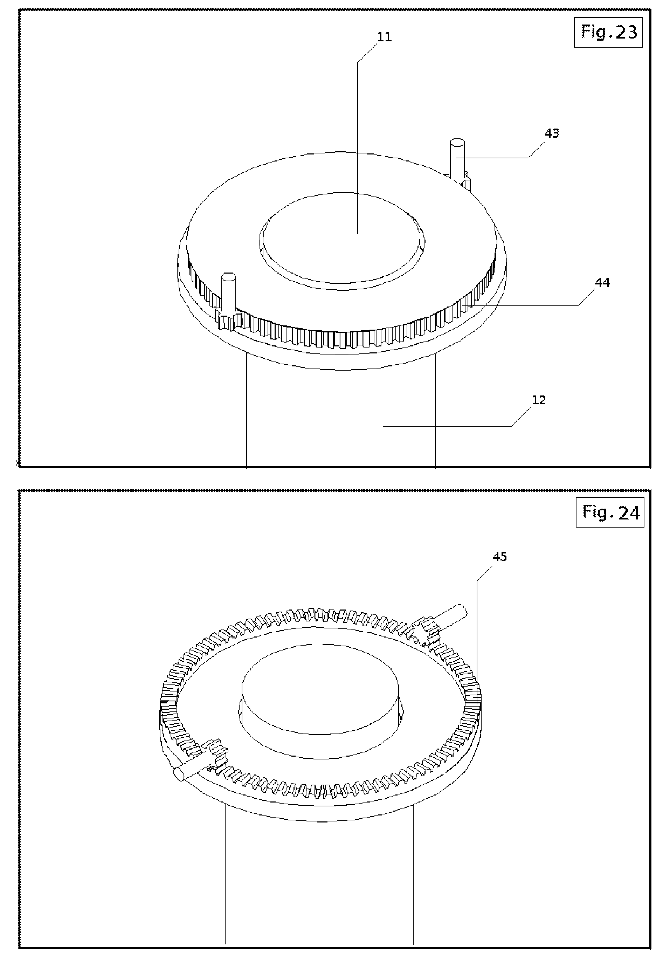

Referring to FIG. 23 as in one embodiment of the present invention, shown is an axonometric view of an external gear type starting gear wheel **44** being the upper part of the central hub of a planetary rotor device. This illustrates that the starting gear wheel can also be of the external gear wheel type.

Referring to FIG. 24 as in one embodiment of the present invention, shown is an axonometric view of a bevel gear type starting gear wheel **45,** being the upper part of the central hub of a planetary rotor device. This illustrates that the starting gear wheel can also be of the bevel gear wheel type.

Referring to FIG. 25 as in one embodiment of the present invention, shown is a drawing of an axonometric view of the hinge-2 joint (vertical parallel axle **15** and horizontal axle **46**) between an above water level spoke **38** and a balanced floating blade **20.** This illustrates the robustness of the hinge construction.

Referring to FIG. 26 as in one embodiment of the present invention, shown is a drawing of an axonometric view of the hinge joint between a below water level spoke and a parallel axle with blade having a cutout. This illustrates the hinge-lug **16** is specially shaped to hold the planetary axle **15** in such a position to the spoke **14,** that the balanced floating blade (here omitted) can position itself in full length parallel resting against the spoke.

Referring to FIG. 27 as in one embodiment of the present invention, shown is a drawing of an axonometric view of the hinge joint **28** between a below water level spoke **14** and a parallel axle with blade not having a cutout. This illustrates that the hinge construction is less complicated.

Referring to FIG. 28 as in one embodiment of the present invention, shown is a drawing of an axonometric view of the sliding joint **42** between a below water level spoke **14** and a parallel axle with extension **41** of a rotor with 3 pairs of spokes where of each pair of spokes one spoke is above water level and one spoke is below water level.. In this drawing the balanced floating blade is omitted. This illustrates the solution for the difference in vertical flexibility between spokes above water level and spokes below water level.

Referring to FIG. 29 as in one embodiment of the present invention, shown is a drawing of a sectional plane view **47** of a below water level spoke. This illustrates that also these spokes when rotating are contributing to produce maximum drag when encountering water flow in one direction, and either minimum drag, when encountering water flow in the opposite direction.

Referring to FIG. 30 as in one embodiment of the present invention, shown is a collection of sectional plane views of balanced floating blades (from a top view point). This is not an exhaustive collection, it only illustrates that depending on manufacturing costs, local circumstances, desired robustness and performance optimizing conditions, the shapes of the blades can be different without seriously interfering with the main principle of buoyancy adjustment and rotating properties causing maximal volume catching when encountering water flow in one direction, and either minimum volume catching, when encountering water flow in the opposite direction. Shown are symmetrical designs **48, 49, 50, 52** and asymmetrical designs **51, 53, 54.** Also shown is the difference in straight-lined simple to construct designs **48, 49, 50, 51,** and more complicated rounded, curved designs **52, 53, 54.**

Referring to FIG. 31 as in one embodiment of the present invention, shown is a selection of the main elements of an application of this invention, drawn separately to give better insight, also added are the main elements of a possible superstructure, which illustrates the possibility to transfer the power from the central starting gearwheel to known devices nowadays used by the windmill industry. Shown is the fixed central pillar **11** functioning as the central axle; the bearing ring **25** to be fixed to the central pillar to bear the construction of the rotating spoke-hub **37** and spokes **38** (here shown as the variant with 3 spokes above water level, see Fig. 16); the planetary axles **15** parallel to the central axle, holding the balanced floating blades **30** rotating around them and the starting gear wheel **13** being the upper part of the rotating spoke-hub. The possible superstructure (See Fig. 32) is formed by the gear unit housing **56** situated on the starting gearwheel cover **55,** both to be fixed at the fixed central pillar forming a platform for the further built up 57 of this superstructure on which the nacelles **58** housing the generators are fixed.

Referring to FIG. 32 as in one embodiment of the present invention, shown is a more detailed drawing of an application of this invention with main elements separated, showing one of the possibilities to utilize it to drive a multiple set of standard windmill generators, here situated in housings (nacelles) **58** commonly used in the wind turbine field. Shown is the starting gearwheel cover **55** and the gear unit housing **56** forming a platform on which a foot **59** for the nacelles holds a belt or chain driven transmission **60** to the drive shafts of the standard windmill generators. Shown are the holes **62** for the shafts that transfer the power from the gear house to the foot of the nacelles. Also shown are the holes **61** through which the cog wheel shafts **43** transfer the rotating power from the starting gearwheel **13** to the gear house.

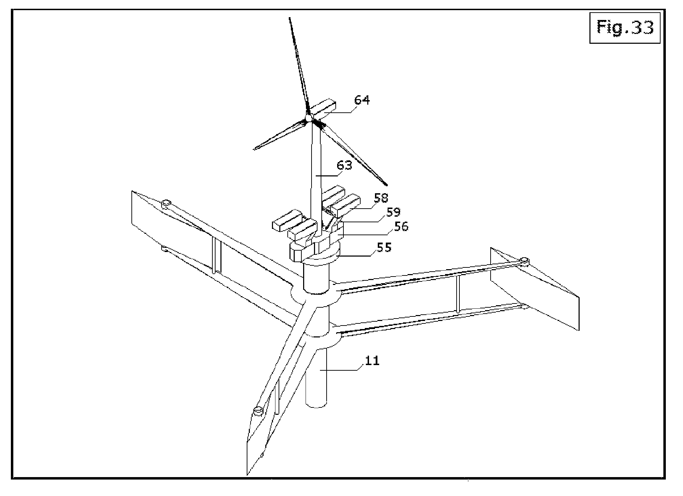

Referring to FIG. 33 as in one embodiment of the present invention, shown is an integrated (main elements unified) drawing of an application of this invention (in this case displayed as the variant with 3 pairs of spokes below water level. see Fig. 14) showing one of the possibilities to utilize it to drive a multiple set of generators, here situated in housings (nacelles) **58** commonly used in the wind turbine field. Shown is the gear unit housing **56** situated on the starting gearwheel cover **55,** all fixed at the fixed central pillar **11** forming a platform for the foot **59** of the nacelles holding the transmission of the output of the gear unit housing to the generators. Also shown is the possibility of a further extension **63** of the fixed central pillar to be equipped with a standard wind-turbine **64.**
While the present invention has been related in terms of the foregoing embodiments, those skilled in the art will recognize that the invention is not limited to the embodiments depicted. The present invention can be practiced with modification and alteration within the spirit and scope of the appended claims. Thus, the description is to be regarded as illustrative instead of restrictive on the present invention.

## Claims

1. A vertical axis planetary rotor device, comprising: a central axle unit consisting of a fixed shaft and a rotating spoke hub, the spoke hub having at least three rotor spokes that have a certain degree of vertical flexibility to cope with differences in water level or vertical water movements, each spoke holding a minimum of one blade or one set of blades rotating around a planetary axis parallel to the central axis, the spoke functioning itself as, or being equipped with, a stop that will position the blade to produce maximum drag when encountering fluid flow in one direction, the blade having minimum drag when encountering fluid flow in the opposite direction, the blades having adjustable buoyancy to support the construction, especially by compensating the lack or surplus of buoyancy of the hub and spoke framework, and by this creating a situation of desired weightlessness of the construction, making it possible to realize a rotor diameter much larger than existing devices for vertical axis rotors, and by this introducing leverage as a dominant characteristic for harnessing the power of relatively slow currents by vertical axis rotors.

2. The vertical axis planetary rotor device of claim 1 wherein the spoke hub is rotating around a fixed pipe or pillar driven into the bottom of a sea, river, lake, channel or other streaming water containing geographical phenomenon, or rotating around a fixed pipe or pillar supported by a foundation construction on the bottom of a sea, river, lake, channel or other streaming water containing geographical phenomenon.

3. The vertical axis planetary rotor device of claim 1 wherein the spoke hub is rotating around a fixed pipe or pillar mounted on a on or below the water surface floating body, held in position by anchors connected to the bottom of a sea, river, lake, channel or other streaming water containing geographical phenomenon.

4. The vertical axis planetary rotor device of claim 1 wherein the spoke hub is extended with an upper ring to be used as the starting gear wheel to transfer power to one ore more electric generators.

5. The vertical axis planetary rotor device of claim 1 wherein the rotor spokes are fixed connected to the spoke hub, but vertically flexible by their structure and materials used, like the wings of large airplanes

6. The vertical axis planetary rotor device of claim 1 wherein the connection between spoke hub and spokes is vertically flexible by the use of a hinge construction.

7. The vertical axis planetary rotor device of claim 1 wherein the connection between blades and spokes is vertically flexible by the use of a hinge construction.

8. The vertical axis planetary rotor device of claim 1 wherein the flexible rotor spokes are shaped with a sharp edge at one side and a hollow shape at the other side to derive additional power from the current to provide additional power supply.

9. The vertical axis planetary rotor device of claim 1 wherein the rotor spokes are situated above the water level and wherein the balanced floating blades are situated under or almost completely under the water level.

10. The vertical axis planetary rotor device of claim 1 wherein the rotor spokes as well as the balanced floating blades are situated under the water level.
